# EUROPEAN PATENT SPECIFICATION

(11) **EP 1 939 015 B1**
(45) Date of publication and mention of the grant of the patent: **17.11.2010**
(21) Application number: 07121735.0
(22) Date of filing: 28.11.2007
(51) Int. Cl.: B60C 1/00, C08K 3/04, C08L 7/00, B60C 5/16

(54) **Pneumatic tire with oxygen barrier component comprised of a rubber composition containing a dispersion of oxygen-adsorbing activated carbon**
Luftreifen mit Sauerstoffbarriereschicht aus einer Gummizusammensetzung mit einer Dispersion sauerstoffabsorbierender Aktivkohle
Pneu doté d'un composant barrière contre l'oxygène comprenant une composition de caoutchouc contenant une dispersion de charbon actif absorbant l'oxygène

(30) Priority: 30.11.2006 US 606735
(43) Date of publication of application: 02.07.2008
(73) Proprietor: The Goodyear Tire & Rubber Company, Akron, OH 44316-0001 (US)
(72) Inventor: Sandstrom, Paul Harry, Cuyahoga Falls, OH 44223 (US)
(74) Representative: Kutsch, Bernd

(56) References cited:
- GB-A- 746 529
- GB-A- 753 543
- GB-A- 945 978
- US-A- 3 420 913
- US-A- 4 895 610
- US-B1- 6 268 421
- KLAUS-DIRK HENNING AND HARTMUT VON KIENLE: "Ullmann: Carbon" [Online] 15 January 2002 (2002-01-15), WILEY , XP002501863 Retrieved from the Internet: URL:http://mrw.interscience.wiley.com/emrw /9783527306732/ueic/article/a05_095/curren t/html#a05_095-sec1-0005> [retrieved on 2008-10-29] chapter 5: Activated Carbon (Klaus-Dirk Henning and Hartmut von Kienle)

## Description

### Field of the Invention

The present invention relates to a pneumatic tire having an oxygen barrier component comprising a rubber composition which contains a dispersion of oxygen-adsorbing activated carbon. The oxygen barrier component may be an internal or external component of the tire. The oxygen barrier component is intended to retard migration of atmospheric oxygen to internal rubber components within the tire. In one embodiment, the oxygen barrier component may be in a form of one or more of an oxygen barrier rubber layer positioned between a tire carcass ply and a tire inner liner rubber layer, an oxygen barrier rubber layer covering axial outer edges of a circumferential belt ply, an outer tire sidewall oxygen barrier rubber layer and a tire tread

### Background of the Invention

Pneumatic tires often contain internal and external rubber components which may be subject to exposure to atmospheric oxygen, including exposure to atmospheric oxygen which may have migrated into the tire body.

For this invention, it is desired to retard migration of atmospheric oxygen to various components of a pneumatic rubber tire, including internal components, by appropriate positioning of one or more oxygen barrier components.

GB-A- 746,529 describes a puncture sealing composition which includes a mixture of rubber and carbon black. Further puncture sealing compositions are described in GB-A- 753,543 and GB-A- 945,978.

US-A- 3,420, 913 describes the use of activated charcoal in rubber compounding.

US-A- 4,895,610 describes a further self-sealing pneumatic tire.

US-B1- 6,268,421 is about reinforcement additives for rubber compositions for tires.

The article of Otto Vohler et al., "Carbon", published by Wiley-VCH Verlag, 2002, describes activated carbon in general terms and its physical and chemical characteristics.

External tire components are components which are typically visually observable which may include, for example, a tire outer tread (which usually contains the tire's running surface), outer sidewall layer and tire chafer components.

Internal tire components are components which are not typically readily visually observable which may include, for example a tire tread base layer underlying a tire outer tread layer, belt ply rubber layer containing cord reinforcement, carcass ply rubber layers containing cord reinforcement, internal sidewall rubber layers, internal sidewall rubber apex components and internal sidewall rubber stiffening inserts other than said apex components.

Accordingly, in one aspect, an internal oxygen barrier rubber layer may be positioned between a cord reinforced rubber carcass ply and a tire inner liner rubber layer and to thereby be positioned, or located, next to and underlying a pneumatic tire inner liner rubber layer.

In practice, a tire inner liner rubber layer is typically relatively impermeable to air (including oxygen) to thereby inhibit oxygen from migrating from a pneumatic tire's cavity into the tire body such as a tire carcass ply and other tire components.

For such purpose, a pneumatic tire inner liner rubber layer is typically comprised of a butyl rubber-based rubber inner liner layer within the tire cavity designed to inhibit permeation of air, particularly oxygen, from the tire cavity into the tire carcass which is a feature well known to those having skill in such tire art. Such butyl rubber (the term "butyl rubber" is intended herein to include halobutyl rubber such as for example bromobutyl rubber and chlorobutyl rubber, unless otherwise indicated) is typically relatively impermeable to air, including oxygen, and moisture and is often used as a major portion of the tire inner liner composition. For example, see US-B- 3,308,177 as well US-B- 6,390,164 and US-B- 6,345, 656.

Accordingly, an aspect of the invention is a pneumatic tire having an additional internal oxygen barrier rubber layer next to and underlying such tire inner liner layer (e.g. positioned between the tire inner liner rubber layer and a carcass ply layer) to further inhibit oxygen from migrating to the tire body (e.g. to a tire carcass ply).

Such internal oxygen barrier rubber layer contains a dispersion of an oxygen-adsorbing particulate activated carbon to adsorb such oxygen and to thereby inhibit its migration through such oxygen barrier rubber layer. Such internal oxygen barrier layer may be comprising, for example, an elastomer comprising natural cis 1,4-polyisoprene rubber which also contains the oxygen-adsorbing activated carbon dispersion. The pneumatic tire inner liner rubber layer may be comprising butyl rubber such as, for example, a halobutyl rubber such as for example at least one of bromobutyl rubber and chlorobutyl rubber which may also contain an non-halogenated butyl rubber.

Such underlying oxygen barrier rubber layer is generally not intended to be exposed to the inner surface of the pneumatic tire cavity and is preferably exclusive of (e.g. preferably does not contain) a butyl rubber.

In a further aspect of the invention, a pneumatic tire is provided having an outer sidewall oxygen barrier rubber layer positioned as an outer surface of a tire sidewall to inhibit atmospheric oxygen from migrating to the remaining body of the tire.

Such sidewall oxygen barrier rubber layer contains a dispersion of an oxygen-adsorbing particulate activated carbon and may comprise, for example, elastomers comprising a combination of cis 1,4-polyisoprene rubber and cis 1,4-polybutadiene rubber.

In another aspect of the invention, it may be desirable to protect the axial outer edges (i.e. belt edges in the shoulder region of the tire) of circumferential belt plies (i.e. cord reinforced belt plies positioned between the tire tread and tire carcass) by providing an oxygen barrier rubber layer which protectively covers (e.g. extends around the axial, outer edges of the belt ply) which might be referred to as a cap or boot of a gum rubber strip (gum rubber in a sense that the rubber composition does not contain woven cord reinforcement).

Accordingly, for another embodiment of this invention, a pneumatic tire is provided having a circumferential cord reinforced rubber belt ply layer which underlies the circumferential tread of the tire, wherein the axial edges of the belt ply layer are covered with an oxygen barrier rubber layer which contains a dispersion of oxygen-adsorbing particulate activated carbon. Such oxygen barrier rubber layer may be comprising an elastomer comprising for example, primarily natural cis 1,4-polyisoprene rubber.

In a further aspect of the invention, the tire tread itself may be an enhanced oxygen barrier layer by comprising a rubber composition which contains a dispersion of oxygen-adsorbing particulate activated carbon to inhibit migration of atmospheric oxygen into the remainder of the tire.

Activated carbon, in general, can be a very versatile adsorbent for various gases and liquids in a sense that the size and density of its pores can be considerably varied.

Activated carbon can be, for example, a primarily amorphous particulate form of carbon. The activated carbon is a microcrystalline, non-graphitic form of carbon, having a large surface area and pore volume which can make it useful in providing adsorptive properties for adsorbing various gases and liquids. Its average specific surface area (BET nitrogen adsorption) is in a range of from 500 to 2000 m²/g, alternately 1000 to 2000 m²/g. Such surface area is of a significant magnitude greater than the average nitrogen adsorption (BET) surface area in a range of, for example, from 8 to 150 m²/g for typical rubber reinforcing carbon blacks and therefore considered herein as being exclusive of such rubber reinforcing carbon blacks.

Commercial grades of activated carbon are often referred to as being gas-phase and liquid-phase adsorbents although the adsorbent abilities may somewhat overlap each other depending upon a particular activated carbon and intended gas and/or liquid to be adsorbed.

Generally, the larger the surface area of the activated carbon, the greater its adsorption capacity with the available surface area of the activated carbon being somewhat dependent upon its pore volume.

Therefore a large surface area may be promoted, for example, by:
(A) maximizing the number of pores of very small dimensions and/or
(B) minimizing the number of pores of very large dimensions.

The pores are often referred to in the sense of their sizes by the International Union of Pure and Applied Chemistry as "micropores", "mesopores" and "macropores".

Micropores are referred to as having a pore width of less than 1.8 nm, mesopores having a pore width of from 1.8 to 50 nm and macropores having a pore width of greater than 50 nm. The presence and pore size distribution of the micropores and mesopores is considered to contribute to the adsorptive capacity of the activated carbon. The activated carbon has a relatively high pore volume percentage of mesopores (e.g. at least 50 percent of the total pore volume having a pore width of 1.8 to 50 nm).

Various raw materials may be used as a source for the carbon by carbonizing and then activation such as, for example and not intended to be limited, wood chips, sawdust, lignite, coconut shells, coal and carbon black refuse, to name a few sources.

Various methods of preparing activated carbon may be used. For example activated carbon may be prepared by one of two distinct processes, namely, by
(A) chemical activation, or
(B) thermal activation.

For example, thermal activation preferably involves gasification of the carbon at relatively high temperatures, after an initial carbonization of the raw material. For example, chemical activation preferably involves chemical dehydration/condensation reactions at significantly lower temperatures. For example, a carbonaceous material such as a lignocellulosic material may be treated with a chemical activation agent such as, for example, phosphoric acid or zinc chloride. Such lignocellulosic material may be, for example, wood chips and/or sawdust. Various method of preparing activated carbon are well known by those having skill in such art.

Various functional groups may be also formed, if desired, during activation of the carbon, for example by interaction of free radicals on the carbon surface, to render the surface of the activated carbon chemically reactive and to thereby further influence its adsorptive abilities and properties.

Activated carbon has been commercially manufactured and marketed for many years as adsorbents for various gasses and liquids including, for example, the use in gas masks and automobile gasoline recovery canisters.

Representative examples of various activated carbon as well as applications and methods of preparation may be found, for example, in US-B-5,206,207, US-B- 5,212,144, US-B- 5,250,491, US-B- 6,337,302, US-B-6,863,713 and US-B- 6,696,384 (using carboxy methylcellulose post treatment) as well as earlier US-B- 2,083,303 and US-B- 2,508,474.

Representative of various commercially available activated carbons for various purposes are, for example, activated carbon from the MeadWestvaco company such as, for example, WV-A900, WV-A1100, WV-A1500, BAX950, BAX1100 and BAX1500; activated carbon from the Carbochem company such as, for example CARBOCHEM™ GS-75, GL80, VP-50, LP-30, DC-50, DC-40, LQ-900, LQ-1000, LQ900S, LQ-1240 and CA-10; activated carbon and activated carbon families from the Calgon Carbon Corporation as, for example, Ventsorb™, Vapor Pac™, Cal™, Cane Cal™, CPG™, Filtrasorb™, GW™, MRX™,and WPL-WPH™.

For this invention, the activated carbon has a combination of surface area and pore size distribution suitable for adsorbing oxygen, the preparation and use of which is considered herein to be within the ability of a person skilled in the art of activated carbon preparation without undue experimentation.

It is considered herein that use of a dispersion of an oxygen-adsorbing activated carbon filler in an internal or external rubber component of a tire is novel and a significant departure from past practice.

For example, it is considered herein that the use of such oxygen-adsorbing rubber component as an internal rubber layer which underlies a butyl rubber based tire inner liner rubber layer, is novel and a significant departure from past practice.

For example, it is further considered herein that use of such oxygen-adsorbing rubber component as an internal rubber layer which covers the axial outer edges of a circumferential tire belt ply is novel and a significant departure from past practice.

In the description of this invention, the term "phr" is used to designate parts by weight of an ingredient per 100 parts of elastomer, including the butyl rubber, unless otherwise indicated. The terms "elastomer" and "rubber" are used interchangeably unless otherwise indicated. The terms "cure" and "vulcanize" are used interchangeably unless otherwise indicated.

### Summary and Practice of the Invention

In accordance with this invention, a pneumatic tire according to claim 1 is provided.

The oxygen barrier component may be an internal or external component of the tire or layer.

Dependent claims refer to preferred embodiments of the invention.

In one embodiment of the invention, the inner liner rubber layer comprises at least one of butyl rubber and halobutyl rubber, wherein the halobutyl rubber may comprise, for example, at least one of bromobutyl rubber and chlorobutyl rubber.

In a further embodiment of the invention, the internal underlying oxygen barrier rubber layer underlying the tire inner liner rubber layer is exclusive of butyl rubber and halobutyl rubber.

In practice, the rubber inner liner air barrier rubber layer is preferably exclusive of the oxygen-adsorbing activated carbon contained in said internal underlying oxygen barrier rubber layer.

In an additional embodiment of the invention, a pneumatic tire is provided which contains a circumferential cord reinforced rubber belt ply layer which underlies the circumferential tread of said tire, wherein the axial edges of a said belt ply layer are covered by an oxygen-adsorbing component in a form of an oxygen-adsorbing rubber layer comprising, for example, natural cis 1,4-polyisoprene rubber, and which contains a dispersion of an oxygen-adsorbing particulate activated carbon to inhibit migration of oxygen through the oxygen-adsorbing rubber layer to the axial edges of the belt ply layer.

In a further embodiment of the invention a pneumatic tire is provided having an external, outer sidewall rubber layer containing a dispersion of an oxygen-adsorbing particulate activated carbon to inhibit migration of atmospheric oxygen through the outer sidewall rubber layer.

In an additional embodiment of the invention, a pneumatic tire is provided having an outer tread rubber layer containing a running surface of the tread comprising a rubber composition which contains a dispersion of an oxygen-adsorbing particulate activated carbon.

In a further embodiment of the invention, a pneumatic tire is provided having an tread base rubber layer underling a tread outer rubber layer (the tread outer rubber layer containing a running surface of the tread) wherein the tread base rubber layer comprises a rubber composition which contains a dispersion of an oxygen-adsorbing particulate activated carbon.

### Drawings

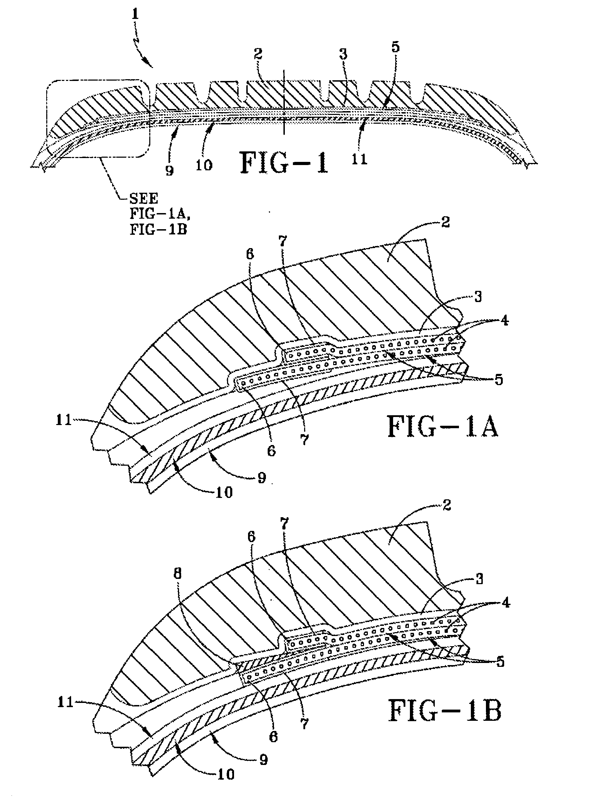

The FIG 1, FIG 1A and FIG 1B are provided for a further understanding of the invention.

In the drawings a partial cross-section of a pneumatic tire is provided to illustrate an internal oxygen barrier rubber layer positioned between a tire inner liner rubber layer and a tire carcass layer which is thereby underlying a tire inner liner.

In the drawings, the partial cross-section of the pneumatic tire is provided to illustrate a circumferential cord reinforced rubber belt ply layer having its axial (outer) edges covered an oxygen barrier rubber layer.

In FIG 1 (together with FIG 1-A and FIG 1-B) a tire 1 is presented with a circumferential rubber tread 2, an underlying circumferential tread base layer 3, underlying circumferential cord reinforced rubber belt ply layers 5, a rubber inner liner butyl rubber layer 9 and a cord reinforced rubber carcass ply 11.

In one embodiment, the tire contains an internal oxygen barrier layer 10 which is positioned between the inner liner rubber layer 9 and tire carcass ply layer 11.

The internal, oxygen barrier layer 10 is a diene-based rubber composition with the rubber comprising primarily natural cis 1,4-polyisoprene, which contains a dispersion of an oxygen-adsorbing particulate activated carbon to inhibit migration of oxygen through the oxygen barrier layer 10 to the remaining body of the tire such as for example to the carcass ply 11. The oxygen barrier rubber layer 10 preferably also contains a dispersion of rubber reinforcing carbon black in addition to said oxygen-adsorbing activated carbon.

The inner liner butyl rubber layer 9 comprises a bromobutyl rubber based rubber composition which contains a dispersion of rubber reinforcing carbon black to the exclusion of the oxygen-adsorbing activated carbon of said internal, underlying oxygen barrier rubber layer 10.

In FIG 1-A, an embodiment of the tire 1 is presented in which the belt ply layers 5 which underlie the tread base layer 3 are shown as a rubber composition 6 with internal cord reinforcement 4 together with a oxygen barrier gum rubber cap layer 7 covering its axial outer edges

The oxygen barrier rubber layer 7 is of a rubber composition comprising natural cis 1,4-polyisoprene rubber and which contains a dispersion of an oxygen-adsorbing particulate activated carbon for adsorbing oxygen to thereby inhibit migration of oxygen through the oxygen barrier layer 7 to the axial outer edges of the belt ply layer 5.

FIG 1-B is similar to FIG 1-A except that a embodiment is presented in which a rubber wedge 8 is positioned between axial outer ends of first and second belt ply layers 5 which is a diene-based rubber composition comprised primarily of natural cis 1,4-polyisoprene, and which contains a dispersion of an oxygen-adsorbing particulate activated carbon for adsorbing oxygen to thereby inhibit migration of oxygen through the rubber wedge 8 to the belt ply layers 5.

In a further embodiment of the invention, the tire tread 2 which contains the tire tread running surface for contacting the ground and the underlying tire tread base 3 is comprises a rubber composition containing at least one diene-based rubber and which contains a dispersion of an oxygen-adsorbing particulate activated carbon for adsorbing oxygen and thereby inhibiting migration of oxygen through the tread to the remaining body of the tire.

In an additional embodiment of the invention, an outer tire sidewall rubber layer (not shown) is composed of a rubber composition comprising at least one diene-based rubber and which contains a dispersion of an oxygen-adsorbing particulate activated carbon for adsorbing oxygen and to thereby inhibit migration of oxygen through the outer tire sidewall rubber layer to the remaining body of the tire.

The following Examples are provided for a further understanding of the invention. The parts and percentages are by weight unless otherwise indicated.

### EXAMPLE I

Prospective exemplary illustrative oxygen barrier rubber compositions comprising a natural rubber-based elastomer which contains a dispersion of oxygen-adsorbing particulate activated carbon are presented as Sample A and Sample B.

Prospective rubber Sample A is proposed for an oxygen barrier layer to be positioned next to and underlying a bromobutyl rubber based tire inner liner layer (between a tire carcass ply and tire inner liner layer) in a manner similar to the Figures of the drawings.

Prospective rubber Sample B is proposed for an oxygen barrier layer positioned to cover axial outer edges of a tire circumferential belt ply layer in a manner similar to FIG 1-A of the drawings or as a rubber wedge positioned between axial outer edges of two overlapping circumferential belt ply layers in a manner similar to FIG 1-B of the drawings.

The rubber compositions may be prepared by mixing ingredients in an internal rubber mixer(s).

The ingredients can be mixed in at least one sequential, non-productive (NP), mixing stage followed by a productive mixing stage (PR) in which curative(s) are added.

The proposed rubber Sample A and rubber Sample B are illustrated in the following Table 1. The parts and percentages are by weight unless otherwise indicated.

**Table 1**

| **Material** | **Barrier Sample A** | **Barrier Sample B** |
|---|---|---|
| **Non-Productive Mixing Step** | | |
| Natural, cis 1,4-polyisoprene rubber | 100 | 100 |
| Rubber reinforcing carbon black, (N330)¹ | 50 | 50 |
| Zinc oxide | 8 | 8 |
| Fatty acid (primarily stearic acid) | 1 | 1 |
| Cobalt stearate | 0 | 2 |
| Oxygen-adsorbing activated carbon | 5 | 5 |

| **Productive Mixing Step** | | |
|---|---|---|
| Sulfur | 3 | 4 |
| Sulfur vulcanization accelerator(s)² | 1.5 | 1.6 |

| | | |
|---|---|---|
| ¹N330 rubber reinforcing carbon black, an ASTM designation ²Comprising sulfenamide and quanidine types | | |

The rubber Samples may be prepared by mixing the elastomers(s) together with reinforcing fillers and other rubber compounding ingredients in a non-productive mixing stage (NP) in an internal rubber mixer for a period of, for example, about 4 minutes to a temperature of, for example, 160°C. The resulting rubber composition may then be mixed in a productive mixing stage (PR) in an internal rubber mixer with curatives for a period of, for example, about 2 minutes to a temperature of, for example, 110°C. The rubber compositions can be sheeted out and cooled to below 40°C between the non-productive mixing and the productive mixing steps.

### EXAMPLE II

A prospective exemplary illustrative tubeless pneumatic rubber tire can be prepared with an internal oxygen barrier rubber layer of rubber composition Sample A of Example I underlying its inner liner rubber in a manner similar to FIG 1 and with an internal oxygen barrier layer of the rubber composition of Sample B of Example I covering the axial outer ends of its belt ply layer(s) in a manner similar to FIG 1-A of the drawings.

The green (uncured) tire can be cured in a suitable tire curing mold at a suitable temperature and time to form the vulcanized tire.

## Claims

1. A pneumatic tire (1) having an oxygen barrier component (10) comprising an oxygen barrier rubber which contains a dispersion of oxygen-adsorbing particulate activated carbon, **characterized in that** said oxygen-adsorbing activated carbon comprises a microcrystalline, non-graphitic form of carbon having an average specific surface area determined by nitrogen adsorption of from 500 to 2000 m²/g, wherein at least 50 percent of the total pore volume of said oxygen-adsorbing activated carbon is comprised of pores having a pore width of from 1.8 to 50 nm.

2. The tire of claim 1 wherein said oxygen barrier component is an external oxygen barrier rubber component comprising at least one of an outer tire sidewall layer, a tire chafer and a tire tread (2).

3. The tire of claim 1 wherein said oxygen barrier component is an internal oxygen barrier rubber component selected from at least one of a tire tread base rubber layer (3) underlying a tire outer tread rubber layer (2), a rubber layer (8) covering axial outer ends of a circumferential cord reinforced rubber belt ply (5), an internal sidewall rubber layer, an internal sidewall rubber apex component and an internal sidewall rubber strengthening insert.

4. The tire of claim 1 wherein said oxygen barrier component is an internal oxygen barrier rubber layer positioned between a tire carcass ply (11) and a tire inner liner rubber layer (9).

5. The tire of at least one of the previous claims wherein said oxygen barrier rubber component is a layer comprising a cis 1,4-polyisoprene rubber and a dispersion of an oxygen-adsorbing particulate activated carbon.

6. The tire of at least one of the previous claims wherein said oxygen-adsorbing activated carbon has been prepared by:
(A) a chemical activation preferably comprising at least one of a chemical dehydration and a condensation reaction, or
(B) a thermal activation preferably comprising gasifying carbon at elevated temperature after an initial carbonization.

7. The tire of at least one of the previous claims wherein said oxygen-adsorbing activated carbon has been prepared by treating a lignocellulosic material with a chemical activation agent.

8. The tire of at least one of the previous claims wherein said oxygen-adsorbing activated carbon contains functional groups formed by activation of the carbon by interaction of free radicals on the carbon surface to render the surface of the activated carbon chemically reactive.

9. The tire of at least one of the previous claims wherein said oxygen-adsorbing activated carbon has been post treated with carboxy methylcellulose.

## Patentansprüche

1. Luftreifen (1) mit einem Sauerstoffbarrierenbauteil (10), umfassend einen Sauerstoffbarrierenkautschuk, der eine Dispersion von sauerstoffabsorbierender partikelförmiger Aktivkohle enthält, **dadurch gekennzeichnet, dass** die sauerstoffabsorbierende partikelförmige Aktivkohle eine mikrokristalline, nichtgraphitförmige Form von Kohlenstoff umfasst, der eine durch Stickstoffabsorption ermittelte durchschnittliche spezifische Oberfläche von 500 bis 2000 m²/g aufweist, wobei mindestens 50 Prozent des Gesamtporenvolumens der sauerstoffabsorbierenden Aktivkohle aus Poren mit einer Porenbreite von 1,8 bis 50 nm besteht.

2. Reifen nach Anspruch 1, wobei das Sauerstoffbarrierenbauteil ein äußeres Sauerstoffbarrierengummibauteil ist, umfassend mindestens eines einer äußeren Reifenseitenwandschicht, eines Reifenwulstschutzstreifens und einer Reifenlauffläche (2).

3. Reifen nach Anspruch 1, wobei das Sauerstoffbarrierenbauteil ein inneres Sauerstoffbarrierengummibauteil ist, ausgewählt aus mindestens einem einer Reifenlaufstreifenunterteilgummischicht (3), die unter einer äußeren Reifenlaufstreifengummischicht (2) liegt, einer Gummischicht (8), die axial äußere Enden einer umfangsgerichteten kordverstärkten Gummigürtellage (5) abdeckt, einer inneren Seitenwandgummischicht, einem inneren Seitenwandgummikernprofilbauteil und einem inneren Seitenwandgummibewehrungseinsatz.

4. Reifen nach Anspruch 1, wobei das Sauerstoffbarrierenbauteil eine zwischen einer Reifenkarkassenlage (11) und einer Reifeninnenisolierungsgummischicht (9) positionierte innere Sauerstoffbarrierengummischicht ist.

5. Reifen nach mindestens einem der vorgenannten Ansprüche, wobei das Sauerstoffbarrierenbauteil eine Schicht ist, welche einen cis-1,4-Polyisoprenkautschuk und eine Dispersion einer sauerstoffabsorbierenden partikelförmigen Aktivkohle umfasst.

6. Reifen nach mindestens einem der vorgenannten Ansprüche, wobei die sauerstoffabsorbierende Aktivkohle hergestellt wurde durch:
(A) eine chemische Aktivierung, die bevorzugt mindestens eines einer chemischen Dehydratisierung und einer Kondensationsreaktion umfasst, oder
(B) eine thermische Aktivierung, die bevorzugt das Vergasen von Kohlenstoff auf einer erhöhten Temperatur nach einer anfänglichen Verkokung umfasst.

7. Reifen nach mindestens einem der vorgenannten Ansprüche, wobei die sauerstoffabsorbierende Aktivkohle durch Behandeln eines Lignocellulosematerials mit einem chemischen Aktivierungsmittel hergestellt wurde.

8. Reifen nach mindestens einem der vorgenannten Ansprüche, wobei die sauerstoffabsorbierende Aktivkohle funktionelle Gruppen enthält, die durch Aktivierung des Kohlenstoffs durch Wechselwirkung von freien Radikalen an der Kohlenstoffoberfläche gebildet wurden, um die Oberfläche der Aktivkohle chemisch reaktiv zu machen.

9. Reifen nach mindestens einem der vorgenannten Ansprüche, wobei die sauerstoffabsorbierende Aktivkohle mit Carboxymethylcellulose nachbehandelt wurde.

## Revendications

1. Bandage pneumatique (1) possédant un composant (10) faisant office d'arrêt pour l'oxygène comprenant un caoutchouc d'arrêt pour l'oxygène qui contient une dispersion de charbon activé particulaire adsorbant l'oxygène, **caractérisé en ce que** ledit charbon activé adsorbant l'oxygène comprend une forme microcristalline de carbone non graphitique possédant une aire de surface spécifique moyenne déterminée par adsorption d'azote s'élevant de 500 à 2000 m²/g, au moins 50 pour 100 du volume total des pores dudit charbon activé adsorbant l'oxygène comprennent des pores possédant une largeur de pore de 1,8 à 50 nm.

2. Bandage pneumatique selon la revendication 1, dans lequel ledit composant faisant office d'arrêt pour l'oxygène est un composant externe de caoutchouc d'arrêt pour l'oxygène comprenant au moins un élément choisi parmi le groupe comprenant une couche externe de flanc de bandage pneumatique, une bandelette talon de bandage pneumatique et une bande de roulement de bandage pneumatique (2).

3. Bandage pneumatique selon la revendication 1, dans lequel ledit composant faisant office d'arrêt pour l'oxygène est un composant interne de caoutchouc d'arrêt pour l'oxygène représentant au moins un membre choisi parmi le groupe comprenant une couche de caoutchouc de base de bande de roulement d'un bandage pneumatique (3) sous-jacente à une couche externe de caoutchouc de bande de roulement (2), une couche de caoutchouc (8) recouvrant les extrémités externes axiales d'une nappe circonférentielle de ceintures de caoutchouc (5) renforcée avec des câblés, une couche interne de caoutchouc de flanc, un composant interne de bourrage sur tringle de caoutchouc de flanc et une pièce rapportée interne pour le renforcement du caoutchouc de flanc.

4. Bandage pneumatique selon la revendication 1, dans lequel ledit composant faisant office d'arrêt pour l'oxygène est une couche interne de caoutchouc d'arrêt pour l'oxygène disposée entre une nappe de carcasse de bandage pneumatique (11) et une couche de caoutchouc de calandrage intérieur pour bandage pneumatique (9).

5. Bandage pneumatique selon au moins une des revendications précédentes, dans lequel ledit composant faisant office d'arrêt pour l'oxygène est une couche comprenant un caoutchouc de cis 1,4-polyisoprène et une dispersion d'un charbon activé particulaire adsorbant l'oxygène.

6. Bandage pneumatique selon au moins une des revendications précédentes, dans lequel on prépare ledit charbon activé adsorbant l'oxygène :
(A) via une activation chimique comprenant de préférence au moins une déshydratation chimique et une réaction de condensation ; ou
(B) via une activation thermique comprenant de préférence la gazéification du charbon à température élevée après une carbonisation initiale.

7. Bandage pneumatique selon au moins une des revendications précédentes, dans lequel on prépare ledit charbon activé adsorbant l'oxygène en traitant une matière lignocellulosique avec un agent d'activation chimique.

8. Bandage pneumatique selon au moins une des revendications précédentes, dans lequel ledit charbon activé adsorbant l'oxygène contient des groupes fonctionnels que l'on obtient par activation du charbon par interaction de radicaux libres à la surface du charbon pour rendre la surface du charbon activé chimiquement réactive.

9. Bandage pneumatique selon au moins une des revendications précédentes, dans lequel ledit charbon activé adsorbant l'oxygène fait l'objet d'un traitement ultérieur avec de la carboxyméthylcellulose.
